# EUROPEAN PATENT SPECIFICATION

(11) **EP 1 934 028 B1**
(45) Date of publication and mention of the grant of the patent: **24.03.2010**
(21) Application number: 06807049.9
(22) Date of filing: 06.10.2006
(51) Int. Cl.: B28B 5/04, B28B 3/02, B29C 67/24

(54) **PLANT FOR PRODUCING SLABS OF CONGLOMERATE STONE MATERIAL**
ANLAGE ZUR HERSTELLUNG VON PLATTEN AUS KONGLOMERATSTEINMATERIAL
INSTALLATION POUR LA FABRICATION DE DALLES DE CONGLOMÉRAT DE MATÉRIAU PIERREUX

(30) Priority: 14.10.2005 IT TV20050155
(43) Date of publication of application: 25.06.2008
(73) Proprietor: Toncelli, Dario, 36061 Bassano del Grappa (Vicenza) (IT)
(72) Inventor: Toncelli, Dario, 36061 Bassano del Grappa (Vicenza) (IT)
(74) Representative: Dragotti, Gianfranco
(86) International application number: PCT/EP2006/067152
(87) International publication number: WO 2007/042479

(56) References cited:
- EP-A1- 0 786 325
- EP-A2- 1 375 097

## Description

The present invention relates to the production of articles of conglomerate stone material, in particular in the form of sheetsslabs, and more specifically to a plant for said production process.

In relatively recent years technology for the manufacture of articles, consisting of a conglomerate stone or stone-like material, has been developed and has become established industrially, these articles being characterized by various advantageous properties, the main one of which is the possibility of producing large size blocks (about 3.20 x 1.60 metres) with a relatively small thickness (a few centimetres), such that they are suitable for forming internal and external cladding and flooring of buildings as well as furnishing components.

Secondly these articles have a notable uniformity in terms of external appearance, in particular of the surface which is intended to remain visible, these properties being difficult to obtain in the case of sheets slabs obtained by means of sawing from blocks of natural stone (such as marble, granite, porphyry, etc.).

Thirdly these conglomerate articles may be made from surplus crushed stone material, namely material which would otherwise remain unused after extraction of blocks of stone material from the quarries, with an obvious advantage not only from the point of view of cost of the raw materials but also as regards environmental impact.

The technology in question, which is commercially known as "Bretonstone™ " envisages essentially:
(a) preparation of an initial mix consisting mainly of one or more stone or stone-like granular materials, said granular materials having a selected particle size, a filler and a binder;
(b) deposition of a layer of this mix, with a predefined thickness, on a temporary support surface and subsequent covering of the mix with a similar support;
(c) a vacuum vibrocompression step, during which the mix undergoes the action of a press in an environment in which a predefined vacuum has been formed and at the same time a vibratory movement of predefined frequency is applied to the layer;
(d) a final step involving hardening of the resultant rough-formed article, the procedures for this step depending mainly on the nature of the binder.

In the technology in question it is possible to use an inorganic binder, in particular of the cement-based type, in which case the hardening step is performed using the procedures which are typical of cement-based articles.

Alternatively, it is possible to use a binder consisting of an organic hardening resin, in which case hardening of the rough-formed slabsheet is performed using techniques which are well-known for synthetic resins, usually by means of the combined action of a catalyst agent and an accelerator with application of heat, where necessary.

For more detailed information regarding these processes and plants for producing articles in the form of slabssheets reference should be made to the following patents: EP-A-0,786,325 which discloses such a plant according to the pre-amble of claim 1 and 1,027,205 relating to the use of organic binders, WO-A-2004/039547 relating to inorganic binders, and IT-A-1,181,570 relating to preparation of the initial mix.

The plant for producing slabs using the technology briefly mentioned above envisages substantially an upstream section in which the starting mix is prepared, a first station in which the mix is deposited on a temporary support so as to then be covered with a protection similar to said support, a second station in which the mix is subjected to vacuum vibrocompaction and, finally, a third station in which hardening of the slab is performed.

In the plants known hitherto and constructed the starting mix is preferably deposited in a mould of elastomer material resting on a conveyor belt and subsequently covered by a protective sheet made of material similar to that of the mould.

Feeding of the conveyor belt brings the layer of mix deposited in the mould and lined with the protective sheet into the vacuum vibrocompression station. In this station a machine comprising a vibrating ram or pressing plate operates, said ram or plate being made to perform a vertical movement and being enclosed in an environment in which a vacuum of predefined value is formed. At the same time, during compression, a vibratory movement with a predefined frequency is applied to the layer of mix.

In all these types of plant the conveyor belt, which is normally made of a fabric-like elastomer material and comprises an upper section or operating section and a bottom section or return section, is subject - specifically in the region of the vacuum vibrocompression station - to various problems which hitherto have not been solved in an industrially satisfactory manner.

In fact, in the region of the vibrocompression station, the plant has a solid foundation able to withstand the high stresses which are exerted by the pressing plate. The foundation has a raised surface on which the metal base of the vibrocompression machine is secured and where, along the surface, the upper section of the conveyor belt moves towards the bottom section, coming into contact therewith. The conveyor belt, which stops temporarily during operation of the vacuum vibrocompression machine, during other stages of the operating cycle is fed forwards intermittently. During feeding, precisely on the metal base of the aforementioned machine, the two sections of the conveyor belt travel in mutual contact and the nature of the material from which the conveyor belt is made prevents easy sliding.

Moreover, precisely when the belt stops during operation of the vibrocompression machine, the two sections of the belt must adhere perfectly to each other, in order to prevent unevenness or depressions which may result in incorrect compression of the layer of mix and therefore in defects in the final slabsheet.

The perfect adhesion between the two sections of the belt in turn results in a further difficulty when the conveyor belt starts to move again after being stopped.

On the aforementioned metal base of the machine the bottom section of the belt may adhere to the abovementioned raised surface with a suction effect, so that the belt is prevented from moping again once the vibrocompression step has been completed.

Unless special measures are adopted, the bottom section of the conveyor belt accumulates on the raised surface residual amounts of encrusted mix which must be removed so as not to prevent correct operation of the vibrocompression machine, therefore resulting in the need for frequent cleaning and therefore a greater downtime or inactivity of the plant.

In the region of the aforementioned base, the pressing plate is enclosed inside a bell-shaped cover which ensures that vibrocompression is performed under a vacuum. This bell-shaped cover is movable vertically and its bottom edges must provide a sealing effect by means of a seal acting on the upper section of the conveyor belt.

However, in the region of the aforementioned raised surface, the seal is provided on a double layer consisting of both the sections of the conveyor belt. Thus, especially when the surrounding temperature is cold low (as during the winter period) so that the seal hardens, the air sealing effect is limited, to the detriment, therefore, of the degree of vacuum which can be achieved in the aforementioned bell cover.

Finally, intermittent feeding of the conveyor belt must ensure that the mix to be compacted is perfectly positioned underneath the pressing plate. Since the conveyor belt has a considerable extension lengthwise, not infrequently it happens that, for example owing to thermal expansion and/or mechanical stressing, the length varies to a such degree as to upset correct positioning of the layer of mix with respect to the plate of the vibrocompression machine.

Also known in the art is the plant disclosed In EP-A-1 375 097 in which piston means are utilized to push the moulds containing precompacted ceramic powder blanks to the beginning of a conveyor directed toward the forming cavity of a press.

The main object of the present invention is therefore to solve in an industrially advantageous manner the problems and the drawbacks briefly described above.

This object is achieved with the plant according to claim 1 of the present invention.

In the preferred embodiment of the present invention said gripping means are gripper jaw means.

As may be better appreciated from the detailed description which follows of a preferred, but not exclusive embodiment of the invention, said description being provided in relation to the accompanying drawings, all the problems and drawbacks of the prior art solution are solved in an industrially advantageous manner.

In the drawings:
- Figs. 1 and 2 are schematic views, i.e. a side elevation and top plan view, respectively, of the plant according to the prior art described above;
- Fig. 3 is an enlarged view of the detail of this plant, shown encircled by a dot-dash line circle in Fig. 1;
- Figs. 4 and 5 are views, similar to those of Figs. 1 and 2, of the plant according to the present invention;
- Fig. 6 is a partial view, similar to Fig. 4, of the plant with the layer of mix positioned inside the vibrocompression station.
- Figs. 7-10 are enlarged detail views which show different operating conditions of the means for transferring the moulds of the plant according to the invention.

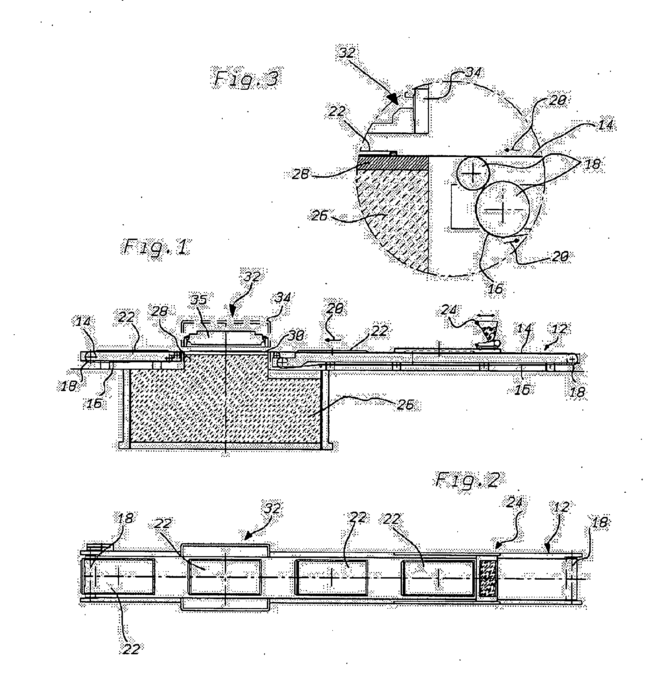

With reference first of all to Figures 1 to 3, the plant according to the prior art comprises an endless conveyor belt 12 consisting of an upper or operating section 14 and a bottom or return section 16. Suitable drive and transmission rollers 18 cause feeding of the belt 12 in the direction indicated by the arrows 20.

Moulds 22, preferably of the type described in the patent EP-A-1,027,205, are deposited on the upper section 14 of the conveyor belt 12 so that each mould is firstly arranged in the filling station where a dispensing machine (of the type described, for example, in the abovementioned patent application WO-A-2004/039547), indicated generically by the reference number 24, performs filling of the mould with a layer of mix of the desired thickness.

Once this phase has been completed, after covering the layer of mix with a protective sheet, the mould is fed to the vibrocompression station which comprises a solid foundation 26 forming a raised surface 28 which supports the metal base 30 of the vibrocompression machine indicated generally and overall by the reference number 32.

As already mentioned, the vibrating ram or pressing plate 35 of the machine 32 is movable vertically between a raised or inactive position (visible in Fig. 1) and a lowered or operating position and is enclosed inside an outer bell cover 34 which is also movable vertically and inside which a predetermined degree of vacuum may be established.

From Figure 3 it can be readily appreciated that the bottom section 16 of the conveyor belt 12, in the region of the raised surface 28, is deviated by the transmission rollers 18, so as to pass over the metal based 30. Consequently, the bottom section 16 comes into contact with the upper section 14 of the conveyor belt 12.

The intermittent feeding movement of the conveyor belt 12 brings each mould opposite and into alignment with the pressing plate 35, following which feeding of the conveyor belt 12 is interrupted and the vacuum bell cover 34 is lowered until it presses against the upper surface of the belt 12, with a pressure such as to ensure a seal against the external air and therefore allow the formation of a fairly pronounced vacuum inside the bell cover.

At this point (namely after the vacuum has been created inside the bell cover) the ram 35 performs the downward stroke, engaging with the upper surface of the mould 22 and pressing the layer of mix contained inside it.

At the same time, as already mentioned, a vibratory movement of predetermined frequency is applied to the ram 35 resting on the mould and pressing continues until the desired result has been achieved, i.e. in particular that of compacting the layer of mix with a settled arrangement of the granular materials which form it.

Once this step has been completed, feeding of the conveyor belt 12 is resumed and the mould 22, as a result of this feeding movement, is extracted from the vibrocompression station so as to be removed and transferred to the following station of the plant where the mix undergoes hardening, using procedures determined by the nature of the binder with which it was prepared.

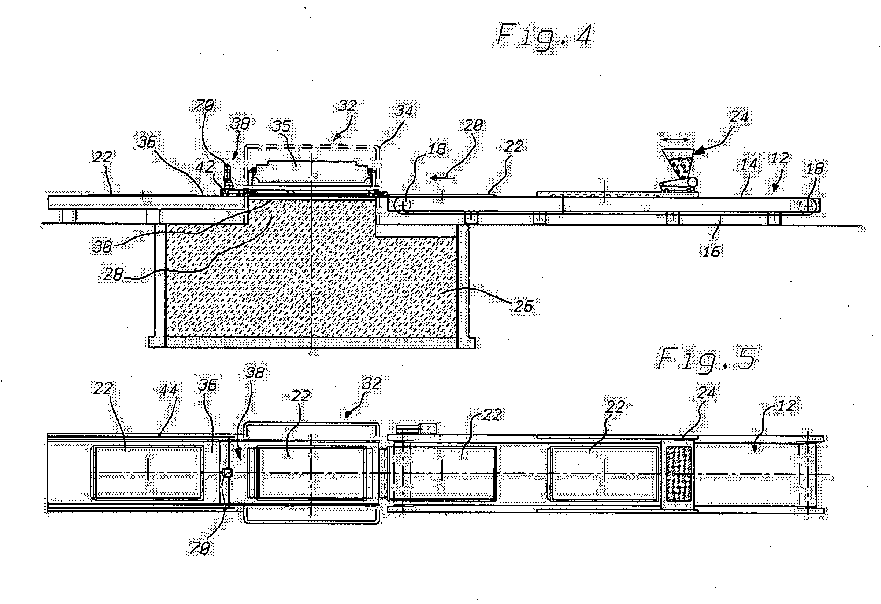

If we now consider the plant according to the present invention, the general structure of which is shown in Figures 4 to 6 (relating to a preferred embodiment and using the same reference numbers for components which are substantially identical to those of Figures 1 to 3), it again comprises a conveyor 12, preferably of the belt type, which conveys the moulds 22, which are of the same type as that described above and are filled with the mix distributed in a uniform layer, as far as the front end of the vibrocompression machine.

The latter has substantially the same configuration as that shown in Figures 1 to 3 and comprises a foundation 26 with a raised surface 28 which supports the metal base 30, the vibrating ram or pressing plate 35 able to perform a vertical translatory movement between a raised or inactive position and lowered or working position.

A vacuum bell(-shaped) cover 34 encloses the vibrocompression machine and is also able to perform a vertical displacement between a raised or inactive position and a lowered or working position, where it forms a hermetic seal with its bottom edge (preferably via a sealing element) against the base 30, surrounding and enclosing both the vibrating ram 35 and the mould 22 positioned opposite and below it.

Downstream of the vibrocompression station there is envisaged a supporting and sliding surface 36 aligned horizontally both with the upper surface of the metal base 30 and with the travel surface 14 of the conveyor 12. In particular the upper side of the surface 36 forms together with the upper surface of the base 30 a single sliding plane.

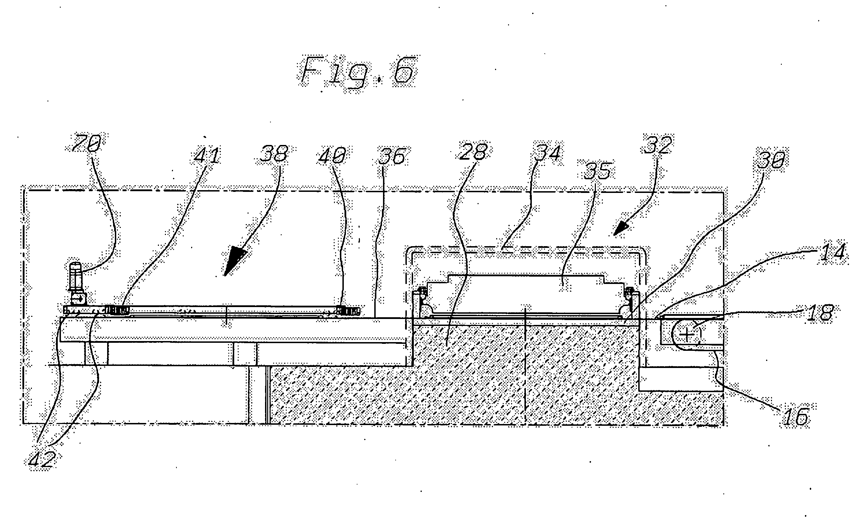

The upper side of the support surface has, slidably mounted thereon, a carriage - denoted overall by the reference number 38 - which is mounted on wheels 42 and provided with an on-board drive unit 70 which controls the displacement thereof along travel or guide ways 44 parallel to each other and parallel to the edges of the surface 36 (see Fig. 5 and 6).

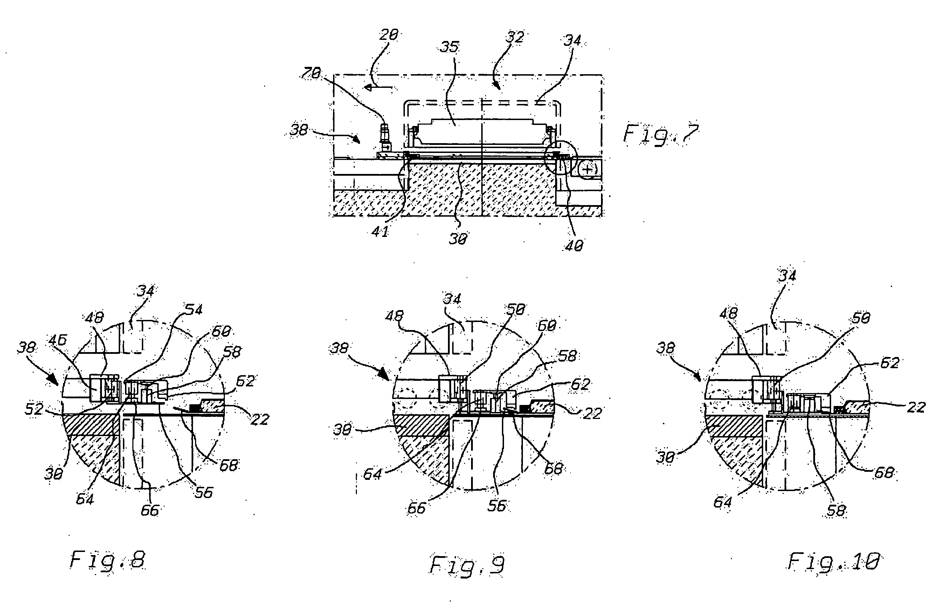

In this preferred embodiment, the front and the rear of the carriage 38 are provided with gripper jaw means 40 and 41 which are identical to each other and which will now be described with particular reference to Figures 7 to 10 which show the front gripper jaws 40. The gripper jaws 40, which are directed towards the vibrocompression machine, have the function of gripping the mould 22 with the soft mix to be introduced into the machine, while the rear gripper jaws 41 have the function of simultaneously gripping the mould with the compacted mix to be extracted from the machine. In this way, with a single displacement of the carriage 38, two moulds are moved simultaneously, saving precious time and compressing the production cycle of the plant.

The carriage 38 consists of a quadrangular frame with two longitudinal members on which the wheels 42 are mounted and two cross-pieces carrying the gripper jaw means 40, 41. A C-shaped flange, denoted by the reference number 48, is integral with the front cross-piece 46 (shown in Figures 8 to 10). The arms of the flange 48 projecting from the front of the cross-piece 46 are connected by a vertical cylinder 50 of a first cylinder and piston assembly having the function of raising and lowering the gripper jaws 40, since it must remain raised during the fast entry of the carriage 38 into the vibrocompression machine in order to pass above the mould containing the compacted slab sheet to be extracted. The piston 52 of the cylinder 50 is integral with the end of a bracket 54 which has substantially the form of an L, the bottom side 56 of which forms the first of the two gripping members of the gripper jaws 40. Said side 56 has, mounted thereon, a second cylinder and piston assembly, the cylinder 58 of which is rigidly fixed to the side 56, while the piston 60 is integral with the second gripping member 62 of the gripper jaws 40.

Said gripping member 62 is guided during the vertical raising and lowering movement, produced by displacement of the piston 60 with respect to the cylinder 58, by a bush 64 which is keyed onto a pin 66 which is also rigidly fixed to the bottom side 56 of the bracket 54.

Both the first gripping member 56 of the gripper jaws 40 (which, as already mentioned, is formed by the bottom side 56 of the bracket 54) and the second member 62 extend parallel to the cross-piece 46, namely transversely with respect to the direction of feeding of the moulds 22, over a distance substantially equal to the width of the said moulds.

The carriage 38 is movable between a first position - shown in Figure 6 - where it is totally retracted on the supporting and sliding surface 36 where it deposits the mould with the compacted slab sheet extracted from the vibrocompression machine, and a second position - shown in Figure 7. In this second position, the carriage 38 is arranged over most of the base 30 of the press, with the front gripper jaws 40 projecting from the upstream side of the vibrocompression machine for gripping a mould containing the mix distributed in a thin layer to be compacted and with the rear gripper jaws 41 positioned for simultaneous gripping of the mould containing the compacted slab sheet inside the machine.

From Figures 8, 9 and 10 it can be appreciated how the mould 22 has a lip 68 projecting in an inclined manner upwards from the base of the mould 22, in a position suitable for being gripped by the gripper jaw means 40.

When it is required to perform transfer of a mould inside the vibrocompression machine, with the pressing plate 32 and the vacuum bell cover 34 raised, the carriage 38 is arranged in the condition shown in Fig. 8, where the piston 52 is retracted inside the cylinder 50 and therefore the bracket 54 with its side 56 is raised with respect to the sliding surface of the carriage 38.

The piston 52 of the cylinder 50 then lowers the first gripping member of the gripper jaws 40, namely the side 56 of the bracket 54, until it is substantially aligned horizontally with the plane of the base 30 and its front edge is positioned underneath the lip 68 of the mould 22 - see Fig. 9.

In this condition the carriage 38 performs displacement from the position shown in Figure 6 into that shown in Fig. 7.

The cylinder 58 is then actuated so as to cause retraction of the piston 60, so that the second gripping member 62 of the gripper jaws 40 moves towards the free edge of the side 56 of the bracket 54, trapping the lip 68 of the mould which in this way is firmly gripped - see Fig. 10.

By suitably actuating the motor 70, the carriage 38 is displaced in the direction of the arrow 20, conveying with it two moulds 22 until one is positioned exactly on the base 30 of the vibrocompression machine.

The front gripper jaws 40 are then disengaged from the lip 68 of the mould containing the soft mix to be compacted with an operating sequence of the cylinder and piston assemblies 50, 52 and 58, 60, opposite to that of the abovementioned movement (see Fig. 8), following which the carriage 38 is displaced into the position of Fig. 6 for disengagement of the rear gripper jaws 41 from the lip 68 of the mould containing the compacted mix (with a similar operating sequence of the cylinder and piston assemblies), which mould will then be transferred via other means to the hardening station.

It is how possible to perform the vibrocompression step, at the end of which, by means of a similar procedure, the carriage 38 is able to perform extraction of the mould 22 from the vibrocompression machine by means of the rear gripper jaws 41 and its transfer by means of conveying on the support surface 36, from where it will be then transferred to the next station in order to undergo hardening.

From the above description it is clear that with the present invention the problems and drawbacks of the prior art are fully solved in an industrially advantageous manner.

It is also clear that, within the scope of the following claims, modifications and variants which are conceptually and/or mechanically equivalent are possible and may be envisaged, especially as regards the gripping means for gripping and conveying the moulds.

## Claims

1. Plant for manufacturing conglomerate articles in the form of slabs of stone material of the type comprising, in addition to an upstream section where the initial mix is prepared:
- a first station (24) for depositing the mix in the form of a layer with a uniform and predetermined thickness inside a tray mould (22), the mould being able to be covered after deposition of the mix with a protective sheet;
- a second station in which a vacuum vibrocompression machine comprising a vibrating ram or pressing plate (35) operates, and
- a third station for hardening the binder of the initial mix so as to form a slab of conglomerate, and
- transfer means (38, 40, 41) able to convey each tray mould (22) into said second station,
**characterized in that** said transfer means (40, 41) comprise gripping means for displacing the moulds (22) and are also able to extract said tray mould (22) from said second station after the vacuum vibrocompression step, so as to prepare it for subsequent transfer to said third station.

2. Plant for manufacturing conglomerate slabs of stone material according to Claim 1, **characterized in that** said gripping means for displacing and extracting the tray moulds (22) are gripper jaws (40, 41).

3. Plant for manufacturing conglomerate slabs of stone material according to Claim 1, **characterized in that** said gripping means for displacing and extracting the tray moulds (22) are hook members able to extend and retract so as to engage with shaped projections formed on the outer walls of the moulds (22).

4. Plant for manufacturing conglomerate slabs of stone material according to Claim 1, in which the vibrocompression machine of said second station comprises a base (30) underneath said vibrating ram or pressing plate (35), **characterized in that** it comprises a supporting and sliding surface (36), downstream of said second station, having its upper surface aligned horizontally with the upper surface of the base (30) of the vibrocompression press and able to receive the mould (22) extracted from the said vibrocompression machine.

5. Plant for manufacturing conglomerate slabs of stone material according to Claim 1, **characterized in that** said transfer means comprise a carriage (38) with one or two gripper jaws (40, 41) for gripping the tray moulds (22), said carriage being movable between a position, where it is positioned on said supporting and sliding surface (36) and where it deposits a tray mould (22) extracted from the vibrocompression machine, and a position where one of the gripper jaws (40) engages with a tray mould (22) to be introduced into the vibrocompression machine.

6. Plant for manufacturing conglomerates slabs of stone material according to Claim 5, **characterized in that** said carriage (38) consists of a frame formed by two longitudinal members and two cross-pieces (46), said frame being mounted on wheels (42) cooperating with sliding guides or rails (44) which are provided on said supporting and sliding surface (36) and which extend above the base (30) of the vibrocompression machine.

7. Plant for manufacturing conglomerate slabs of stone material according to Claim 6, **characterized in that** motor means (70) ensure the displacement of said carriage (38) between the two said positions.

8. Plant for manufacturing conglomerate slabs of stone material according to Claim 2, **characterized in that** said gripper jaws (40, 41) are provided with raising devices (50, 52, 58, 60) and comprise a bracket (54) integral with the one (46) of said two cross-pieces facing said vibrocompression machine, said bracket (54) having a bottom horizontal side (56) movable between a position raised with respect to the surface of said supporting and sliding plane (36) and a gripping position lowered onto said plane (56), each bracket (54) having, integral therewith, a second gripping member (62) movable between a position raised from the plane of said horizontal side (56), and a gripping position lowered towards the same horizontal side (56), each tray mould (22) having a projecting lip (68) able to be trapped between said second gripping member (62) and horizontal side (56) of said bracket (54).

9. Plant for manufacturing conglomerate slabs of stone material according to Claim 6, **characterized in that** the cross-piece (46) of the two cross-pieces of said carriage (38) facing said vibrocompression machine is integral with a flange (48), the said flange being integral with the piston (52) of a first cylinder and piston assembly, so that the vertical displacement of said flange (48) between the two said positions is determined by the displacement of said piston (52) with respect to the cylinder (50) of said first assembly.

10. Plant for manufacturing conglomerate slabs of stone material according to Claim 8, **characterized in that** said second gripping member (62) is integral with the piston (60) of a second cylinder and piston assembly integral with said bottom side (56) of said flange (48), so that the said vertical displacement of said second gripping member (62) between the said two positions is determined by the displacement of said piston (60) with respect to the cylinder (58) of said second assembly.

11. Plant for manufacturing conglomerate slabs of stone material according to Claim 10, **characterized in that** said second gripping member (62) is integral with a bush (64) sliding along a pin (66) integral with said bottom side (56) of said flange (48).

## Patentansprüche

1. Anlage zum Herstellen von Mischgegenständen in Gestalt von Fliesen aus Steinmaterial jener Bauart, die zusätzlich zu einem stromaufwärtigen Bereich, in dem das Anfangsgemisch vorbereitet wird, Folgendes aufweist:
- eine erste Station (24) zum Ablagern des Gemischs in Gestalt einer Lage mit einer einheitlichen und vorbestimmten Dicke im Inneren einer Muldenform (22), wobei die Form nach der Ablagerung des Gemisches mit einer Schutzplatte abgedeckt werden kann;
- eine zweite Station, in der eine Vakuum-Vibrokompressions-Maschine betrieben wird, die einen Vibrationskolben oder eine Druckplatte (35) aufweist, und
- eine dritte Station zum Härten des Binders des Anfangsgemisches, um so eine Fliese aus Mischmaterial zu erzeugen, und
- eine Transfereinrichtung (38, 40, 41), die jede Muldenform (22) in die zweite Station fördern kann,
**dadurch gekennzeichnet, dass** die Transfereinrichtung (40, 41) eine Greifeinrichtung zum Versetzen der Formen (22) aufweist und darüber hinaus die Muldenform (22) aus der zweiten Station nach dem Vakuum-Vibrokompressions-Schritt herausziehen kann, um diese so für einen nachfolgenden Transfer zu der dritten Station vorzubereiten.

2. Anlage zum Herstellen von Mischmaterialfliesen aus Steinmaterial gemäß Anspruch 1, **dadurch gekennzeichnet, dass** die Greifeinrichtung zum Versetzen und Herausziehen der Muldenformen (22) Greifklauen (40, 41) sind.

3. Anlage zum Herstellen von Mischmaterialfliesen aus Steinmaterial gemäß Anspruch 1, **dadurch gekennzeichnet, dass** die Greifeinrichtung zum Versetzen und Herausziehen der Muldenformen (22) Hakenelemente sind, die sich erweitern und einziehen können, um so mit geformten Vorsprüngen in Eingriff zu gelangen, die an den Außenwänden der Formen (22) ausgebildet sind.

4. Anlage zum Herstellen von Mischmaterialfliesen aus Steinmaterial gemäß Anspruch 1, bei der die Vibrokompressions-Maschine der zweiten Station eine Basis (30) unter dem Vibrationskolben oder der Druckplatte (35) aufweist, **dadurch gekennzeichnet, dass** sie eine Stütz- und Gleitfläche (36) stromabwärts von der zweiten Station aufweist, deren obere Fläche horizontal mit der oberen Fläche der Basis (30) der Vibrokompressions-Presse ausgerichtet ist und die Form (22) aufnehmen kann, die aus der Vibrokompressions-Maschine herausgezogen wird.

5. Anlage zum Herstellen von Mischmaterialfliesen aus Steinmaterial gemäß Anspruch 1, **dadurch gekennzeichnet, dass** die Transfereinrichtung einen Schlitten (38) mit einer oder zwei Greiferklauen (40, 41) zum Greifen der Muldenformen (22) aufweist, wobei der Schlitten zwischen einer Position, an der er an der Stütz- und Leitfläche (36) positioniert ist und eine Muldenform (22) ablagert, die aus der Vibrokompressions-Maschine herausgezogen wird, und einer Position bewegbar ist, an der eine der Greiferklauen (40) mit einer Muldenform (22) in Eingriff ist, die in die Vibrokompressions-Maschine einzuführen ist.

6. Anlage zum Herstellen von Mischmaterialfliesen aus Steinmaterial gemäß Anspruch 5, **dadurch gekennzeichnet, dass** der Schlitten (38) aus einem Rahmen besteht, der durch zwei Längselemente und zwei Querstücke (46) gebildet ist, wobei der Rahmen an Rädern (42) angebracht ist, die mit Gleitführungen oder -schienen (44) zusammenwirken, die an der Stütz-und Gleitfläche (36) vorgesehen sind und sich über der Basis (30) der Vibrokompressions-Maschine erstrecken.

7. Anlage zum Herstellen von Mischmaterialfliesen aus Steinmaterial gemäß Anspruch 6, **dadurch gekennzeichnet, dass** eine Motoreinrichtung (70) das Versetzen des Schlittens (38) zwischen den beiden Positionen gewährleistet.

8. Anlage zum Herstellen von Mischmaterialfliesen aus Steinmaterial gemäß Anspruch 2, **dadurch gekennzeichnet, dass** die Greiferklauen (40, 41) mit Hubvorrichtungen (50, 52, 58, 60) versehen sind und einen Halter (54) aufweisen, der einstückig mit einem (46) der beiden Querstücke ausgebildet ist, das der Vibrokompressions-Maschine zugewandt ist, wobei der Halter (54) eine untere horizontale Seite (56) aufweist, die zwischen einer Position, an der sie hinsichtlich der Fläche der Stütz- und Gleitebene (36) angehoben ist, und einer Greifposition bewegbar ist, die an der Ebene (56) abgesenkt ist, wobei jeder Halter (54) ein mit ihm einstückig ausgebildetes zweites Greifelement (62) aufweist, das zwischen einer Position, die von der Ebene der horizontalen Seite (56) angehoben ist, und einer Greifposition bewegbar ist, die zu derselben horizontalen Seite (56) abgesenkt ist, wobei jede Muldenform (22) eine vorstehende Lippe (68) aufweist, die zwischen dem zweiten Greifelement (62) und einer horizontalen Seite (56) des Halters (54) eingefangen werden kann.

9. Anlage zum Herstellen von Mischmaterialfliesen aus Steinmaterial gemäß Anspruch 6, **dadurch gekennzeichnet, dass** das Querstück (46) der beiden Querstücke des Schlittens (38), das der Vibrokompressions-Maschine zugewandt ist, einstückig mit einem Flansch (48) ist, wobei der Flansch einstückig mit dem Kolben (52) einer ersten Zylinder- und Kolben-Baugruppe ist, so dass das vertikale Versetzen des Flansches (48) zwischen den beiden Positionen durch das Versetzen des Kolbens (52) hinsichtlich des Zylinders (50) der ersten Baugruppe bestimmt ist.

10. Anlage zum Herstellen von Mischmaterialfliesen aus Steinmaterial gemäß Anspruch 8, **dadurch gekennzeichnet, dass** das zweite Greifelement (62) einstückig mit dem Kolben (60) einer zweiten Zylinder- und Kolben-Baugruppe ist, die einstückig mit der unteren Seite (56) des Flansches (48) ist, so dass das vertikale Versetzen des zweiten Greifelements (62) zwischen den beiden Positionen durch das Versetzen des Kolbens (60) hinsichtlich des Zylinders (58) der zweiten Baugruppe bestimmt ist.

11. Anlage zum Herstellen von Mischmaterialfliesen aus Steinmaterial gemäß Anspruch 10, **dadurch gekennzeichnet, dass** das zweite Greifelement (62) einstückig mit einer Buchse (64) ist, die entlang eines Stiftes (66) gleitet, der einstückig mit der Bodenseite (56) des Flansches (48) ist.

## Revendications

1. Installation pour fabriquer des articles agglomérés se présentant sous la forme de dalles en pierre du type comprenant, en plus d'une section en amont où le mélange initial est préparé :
une première station (24) pour déposer le mélange sous la forme d'une couche avec une épaisseur uniforme et prédéterminée à l'intérieur d'un moule à plateau (22), le moule pouvant être recouvert après le dépôt du mélange avec une feuille de protection ;
une deuxième station dans laquelle une machine de vibrocompression sous vide comprenant un vérin vibrant ou une plaque de compression (35) fonctionne, et
une troisième station pour faire durcir le liant du mélange initial afin de former une dalle d'aggloméré, et
des moyens de transfert (38, 40, 41) pouvant transporter chaque moule à plateau (22) dans ladite deuxième station,
**caractérisée en ce que** lesdits moyens de transfert (40, 41) comprennent des moyens de préhension pour déplacer les moules (22) et peuvent également extraire ledit moule à plateau (22) de ladite deuxième station après l'étape de vibrocompression sous vide, afin de le préparer pour le transfert ultérieur vers ladite troisième station.

2. Installation pour fabriquer des dalles d'aggloméré en pierre selon la revendication 1, **caractérisée en ce que** lesdits moyens de préhension pour déplacer et extraire les moules à plateau (22) sont des mâchoires de préhension (40, 41).

3. Installation pour fabriquer des dalles d'aggloméré en pierre selon la revendication 1, **caractérisée en ce que** lesdits moyens de préhension pour déplacer et extraire les moules à plateau (22) sont des éléments de crochet pouvant s'étendre et se rétracter afin de se mettre en prise avec des saillies façonnées formées sur les parois externes des moules (22).

4. Installation pour fabriquer des dalles d'aggloméré en pierre selon la revendication 1, dans laquelle la machine de vibrocompression de ladite deuxième station comprend une base (30) au-dessous dudit vérin vibrant ou plaque de compression (35), **caractérisée en ce qu'**elle comprend une surface de support et de coulissement (36), en aval de ladite deuxième station, ayant sa surface supérieure alignée horizontalement avec la surface supérieure de la base (30) de la presse de vibrocompression et pouvant recevoir le moule (22) extrait de ladite machine de vibrocompression.

5. Installation pour fabriquer des dalles d'aggloméré en pierre selon la revendication 1, **caractérisée en ce que** lesdits moyens de transfert comprennent un chariot (38) avec une ou deux mâchoires de préhension (40, 41) pour saisir les moules à plateau (22), ledit chariot étant mobile entre une position dans laquelle il est positionné sur ladite surface de support et de coulissement (36) et dans laquelle il dépose un moule à plateau (22) extrait de la machine de vibrocompression, et une position dans laquelle l'une des mâchoires de préhension (40) se met en prise avec un moule à plateau (22) destiné à être introduit dans la machine de vibrocompression.

6. Installation pour fabriquer des dalles d'aggloméré en pierre selon la revendication 5, **caractérisée en ce que** ledit chariot (38) se compose d'un châssis formé par deux éléments longitudinaux et deux traverses (46), ledit chariot étant monté sur des roulettes (42) coopérant avec des guides ou rails coulissants (44) qui sont prévus sur ladite surface de support et de coulissement (36) et qui s'étendent au-dessus de la base (30) de la machine de vibrocompression.

7. Installation pour fabriquer des dalles d'aggloméré en pierre selon la revendication 6, **caractérisée en ce que** des moyens de moteur (70) garantissent le déplacement dudit chariot (38) entre lesdites deux positions.

8. Installation pour fabriquer des dalles d'aggloméré en pierre selon la revendication 2, **caractérisée en ce que** lesdites mâchoires de préhension (40, 41) sont prévues avec des dispositifs de levage (50, 52, 58, 60) et comprennent une console (54) solidaire de l'une (46) desdites deux traverses faisant face à ladite machine de vibrocompression, ladite console (54) ayant un côté horizontal inférieur (56) mobile entre une position levée par rapport à la surface dudit plan de support et de coulissement (36) et une position de préhension abaissée sur ledit plan (56), chaque console (54) ayant, solidaire de celle-ci, un second élément de préhension (62) mobile entre une position levée par rapport au plan dudit côté horizontal (56), et une position de préhension abaissée vers le même côté horizontal (56), chaque moule à plateau (22) ayant une lèvre en saillie (68) pouvant être piégée entre ledit second élément de préhension (62) et le côté horizontal (56) de ladite console (54).

9. Installation pour fabriquer des dalles d'aggloméré en pierre selon la revendication 6, **caractérisée en ce que** la traverse (46) des deux traverses dudit chariot (38) faisant face à ladite machine de vibrocompression est solidaire avec un rebord (48), ledit rebord étant solidaire du piston (52) d'un premier ensemble de cylindre et piston, de sorte que le déplacement vertical dudit rebord (48) entre lesdites deux positions est déterminé par le déplacement dudit piston (52) par rapport au cylindre (50) dudit premier ensemble.

10. Installation pour fabriquer des dalles d'aggloméré en pierre selon la revendication 8, **caractérisée en ce que** ledit second élément de préhension (62) est solidaire du piston (60) d'un second ensemble de cylindre et piston solidaire dudit côté inférieur (56) dudit rebord (48), de sorte que ledit déplacement vertical dudit second élément de préhension (62) entre lesdites deux positions est déterminé par le déplacement dudit piston (60) par rapport au cylindre (58) dudit second ensemble.

11. Installation pour fabriquer des dalles d'aggloméré en pierre selon la revendication 10, **caractérisée en ce que** ledit second élément de préhension (62) est solidaire d'une douille (64) coulissant le long d'une broche (66) solidaire dudit côté inférieur (56) dudit rebord (48).
